# EUROPEAN PATENT SPECIFICATION

(11) **EP 3 722 851 B1**
(45) Date of publication and mention of the grant of the patent: **07.09.2022**
(21) Application number: 18885017.6
(22) Date of filing: 21.11.2018
(51) Int. Cl.: G02B 6/44

(54) **LIGHTWEIGHT NON-METAL FLAME-RETARDANT FIRE-RESISTANT OPTICAL CABLE**
LEICHTGEWICHTIGES, NICHTMETALLISCHES, FLAMMHEMMENDES, FEUERBESTÄNDIGES OPTISCHES KABEL
CÂBLE OPTIQUE RÉSISTANT AU FEU, NON MÉTALLIQUE, LÉGER ET IGNIFUGE

(30) Priority: 07.12.2017 CN 201711287426
(43) Date of publication of application: 14.10.2020
(73) Proprietor: Hengtong Optic-Electric Co., Ltd., Suzhou, Jiangsu 215234 (CN)
(72) Inventor: WANG, Rui, Suzhou, Jiangsu 215234 (CN); ZHANG, Xiaoshan, Suzhou, Jiangsu 215234 (CN); LIU, Peidong, Suzhou, Jiangsu 215234 (CN); WU, Di, Suzhou, Jiangsu 215234 (CN); YUE, Haiyin, Suzhou, Jiangsu 215234 (CN); SHI, Huiping, Suzhou, Jiangsu 215234 (CN); SUN, Yixing, Suzhou, Jiangsu 215234 (CN); SUN, Lihua, Suzhou, Jiangsu 215234 (CN); GU, Jiaxiang, Suzhou, Jiangsu 215234 (CN); LIU, Jin, Suzhou, Jiangsu 215234 (CN)
(74) Representative: Locas, Davide
(86) International application number: PCT/CN2018/116787
(87) International publication number: WO 2019/109807

(56) References cited:
- WO-A1-2004/040348
- CN-A- 106 125 216
- CN-A- 106 349 698
- CN-A- 107 765 384
- CN-U- 202 693 882
- CN-U- 203 930 159
- CN-U- 205 861 947
- CN-U- 206 193 295
- CN-U- 207 488 588
- US-A- 4 510 348
- US-A- 5 378 856
- US-B1- 6 236 791
- US-B1- 6 501 887

## Description

### Cross-reference to Related Application

The present disclosure claims the priority to the Chinese patent application with the filing number 201711287426.X, filed on December 7, 2017 with the Chinese Patent Office and entitled "Lightweight Non-metal Flame-retardant Fire-resistant Optical Cable".

### Technical Field

The present disclosure relates to the technical field of optical communication, in particular to a light nonmetal flame-retardant refractory optical cable (i.e. a lightweight non-metal flame-retardant fire-resistant optical cable).

### Background Art

Optical fiber is the most core element in the informatization process. In order to allow the optical fiber to be widely applied in various fields, improving the level of protection of the optical fiber has become the most important development goal, and the flame-retardant refractory optical cable emerges thereby. The flame-retardant refractory optical cable can ensure that the optical cable still can be used in case of fire, so as to effectively reduce property and people loss. The existing flame-retardant refractory optical cables, however, have a relatively low heat-resistant temperature, and cannot meet needs of applications.

The state of the art is reflected in the following documents: CN 106 125 216 A, CN 206 193 295 U, US 6 236 791 B1, CN 205 861 947 U, CN 202 693 882 U, WO 2004/040348 A1.

### Summary

In order to overcome at least one of the above shortcomings, the present disclosure provides a light nonmetal flame-retardant refractory optical cable, which has the advantage of excellent refractory performance, and can withstand a high temperature of 700-800 °C.

In order to achieve the above object, technical solutions of the present disclosure are as follows:
A light nonmetal flame-retardant refractory optical cable includes: a cable core, a refractory layer wrapped around a periphery of the cable core, and a low-smoke halogen-free sheathing layer wrapped around a periphery of the refractory layer, wherein the refractory layer is a a polyimide composite tape, the polyimide composite tape is a ceramic polyimide composite tape, the polyimide composite tape has a thickness of 0.12-0.2 mm, and the polyimide composite tape has a lapping width of 3-5 mm.

The polyimide composite tape is formed by soaking a polyimide tape in a flame-retardant slurry, and subsequently roasting and curing the soaked polyimide tape at 100-180 °C. The flame-retardant slurry includes following raw materials in part by weight:

| | |
|---|---|
| alkyd resin | 30-40 parts; |
| amino resin | 25-30 parts; |
| butyl stearate | 5-8 parts; |
| dolomite powder | 1-3 parts; |
| hydroxyethyl cellulose | 5-10 parts; |
| ammonium polyphosphate | 2-5 parts; |
| isocyanate | 1-2 parts; |
| xylene | 8-15 parts; and |
| anti-aging agent | 1-2 parts. |

Optionally, the low-smoke halogen-free sheathing layer includes following ingredients in percentage by weight:

| | |
|---|---|
| polyolefin | 45-65%; |
| plasticizer | 5-8%; |
| siloxane | 1-3%; |
| gas-phase fire retardant | 20-28%; |
| solid-phase fire retardant | 3-8%; |
| special fire retardant | 5-7%; and |
| white carbon black | 0.5-2%. |

Optionally, the polyolefin is one selected from ethylene-vinyl acetate copolymer and polyethylene.

Optionally, the plasticizer is dioctyl phthalate.

Optionally, the siloxane is polydimethylsiloxane.

Optionally, the solid-phase fire retardant is nano silicon dioxide.

Optionally, the gas-phase fire retardant is at least one selected from magnesium hydroxide and aluminum hydroxide.

Optionally, the special fire retardant is glass microspheres and a silicone oil composite.

Optionally, the cable core includes: at least one optical fiber group, a nonmetal reinforcer provided at a center of the cable core, and a first filler rope having the same outer diameter as the optical fiber group.

Optionally, optical fiber group includes a sleeve, and an optical fiber, a reinforcer, and a second filler rope provided inside the sleeve.

Compared with the prior art, advantages and beneficial effects of the present disclosure at least include the following:
For the light nonmetal flame-retardant refractory optical cable provided in the present disclosure, by choosing the ceramic polyimide composite tape or the double-sided synthetic mica tape as the refractory layer, the refractory performance of the optical cable can be effectively improved, and a high temperature of 700-800 °C can be withstood; besides, the light nonmetal flame-retardant refractory optical cable, using a nonmetal single-sheath structure, not only can be applied indoors, but also can be vertically laid or horizontally laid, especially having prominent advantages when being laid in a vertical pipeline.

### Brief Description of Drawings

In order to more clearly illustrate technical solutions in the technologies of examples of the present disclosure, accompanying drawings which need to be used for description of the technologies in the examples will be introduced briefly below. Apparently, the accompanying drawings in the following description merely show some examples of the present disclosure. Those ordinarily skilled in the art still could obtain other accompanying drawings in light of these accompanying drawings, without inventive effort.

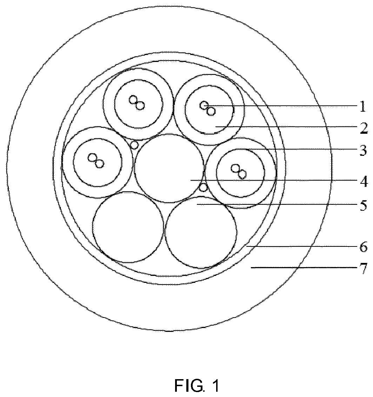

FIG. 1 is a cutaway view of a light nonmetal flame-retardant refractory optical cable provided in example 1 of the present disclosure.

In the above, 1-reinforcer; 2-second filler rope; 3-sleeve; 4-nonmetal reinforcer; 5-first filler rope; 6-refractory layer; 7-low-smoke halogen-free sheathing layer.

### Detailed Description of Embodiments

The technical solutions in the examples of the present disclosure will be described clearly and completely below in connection with the accompanying drawings in the examples of the present disclosure. Apparently, the examples described are merely some but not all examples of the present disclosure. Based on the examples in the present disclosure, all other examples obtained by those ordinarily skilled in the art without inventive effort shall fall within the scope of protection of the present disclosure.

The present example discloses a light nonmetal flame-retardant refractory optical cable, which includes: a cable core, a refractory layer 6 wrapped around a periphery of the cable core, and a low-smoke halogen-free sheathing layer 7 wrapped around a periphery of the refractory layer 6, wherein the refractory layer 6 is a polyimide composite tape, the polyimide composite tape is a ceramic polyimide composite tape, the polyimide composite tape has a thickness of 0.12-0.2 mm, and the polyimide composite tape has a lapping width of 3-5 mm. The polyimide composite tape is formed by soaking a polyimide tape in a flame-retardant slurry, and subsequently roasting and curing the soaked polyimide tape at 100-180 °C; the flame-retardant slurry includes following raw materials in part by weight: 30-40 parts of alkyd resin, 25-30 parts of amino resin, 5-8 parts of butyl stearate, 1-3 parts of dolomite powder, 5-10 parts of hydroxyethyl cellulose, 2-5 parts of ammonium polyphosphate, 1-2 parts of isocyanate, 8-15 parts of xylene, and 1-2 parts of anti-aging agent; further preferably, the anti-aging agent is carbon black.

The light nonmetal flame-retardant refractory optical cable provided in the example of the present disclosure is comprised by the cable core, the refractory layer 6, and the low-smoke halogen-free sheathing layer 7, arranged in sequence from inside to outside, and the ceramic polyimide composite tape or the double-sided synthetic mica tape is chosen as the refractory layer 6 to improve the refractory performance, wherein the ceramic polyimide composite tape is obtained by choosing a polyimide tape as a base material, mixing the base material with the flame-retardant slurry, and roasting and curing the mixture, so as to obtain the polyimide composite tape having a ceramic shell. Although a conventional polyimide tape merely can withstand a high temperature of 400-500 °C for no more than 5 hours, the polyimide tape of a ceramic composite type prepared in the present disclosure has excellent heat insulation performance, can withstand a high temperature of 700-800 °C, and can be applied to flame-retardant refractory optical cables with different structures.

Besides, if the polyimide composite tape has a too small width, when undergoing a high temperature, it is easy to cause cross flow of flame and heat, form a heat passage, and damage a secondary coating material; if the polyimide composite tape has a too big width, the prepared light nonmetal flame-retardant refractory optical cable will have an unsmooth surface, therefore, the thickness and the lapping width of the polyimide composite tape need to be defined.

Optionally, the low-smoke halogen-free sheathing layer includes following ingredients in percentage by weight: 45-65% of polyolefin, 5-8% of plasticizer, 1-3% of siloxane, 20-28% of gas-phase fire retardant, 3-8% of solid-phase fire retardant, 5-7% of special fire retardant, and 0.5-2% of white carbon black; preferably, the polyolefin is one selected from ethylene-vinyl acetate copolymer and polyethylene; preferably, the plasticizer is dioctyl phthalate; preferably, the siloxane is polydimethylsiloxane; preferably, the solid-phase fire retardant is nano silicon dioxide; preferably, the gas-phase fire retardant is at least one selected from magnesium hydroxide and aluminum hydroxide; preferably, the special fire retardant is glass microspheres and a silicone oil composite.

Ceramic polyolefin or an oxygen-barrier material, with excellent heat insulation performance, chosen for the low-smoke halogen-free sheathing layer includes a matrix polyolefin and a large amount of additives as main ingredients, wherein the additives mainly include plasticizer, white carbon black, siloxane, and gas-phase fire retardant, solid-phase fire retardant, and special fire retardant, wherein using the nano-particles for the nano silicon dioxide as the solid-phase fire retardant aims at increasing compatibility between silicon dioxide and polyolefin; the siloxane serves the function of fire retardant mainly by forming silicates; the gas-phase fire retardant includes magnesium hydroxide and aluminum hydroxide, so as to serve the fire retardant function through a fire retardant gas formed; the special fire retardant is glass microspheres and a silicone oil composite, with a quite light weight and being hollow inside, moreover, with high viscosity, the material is easily designed into a sheath of different wall thickness specifications, and when the special fire retardant burns, the glass microspheres will expand and absorb heat, thus forming silicate elastomers, and when undergoing high-temperature burning, ceramization quite easily takes place, and a local oxygen vacuum layer is formed inside, and a layer of compact protection layer is formed, thereby obstructing flame and heat transmission, and protecting the optical fiber against high-temperature damage.

Optionally, the cable core includes: at least one optical fiber group, a nonmetal reinforcer 4 provided at a center of the cable core, and a first filler rope 5 having the same outer diameter as the optical fiber group; preferably, the optical fiber group includes a sleeve 3, and an optical fiber, a reinforcer 1, and a second filler rope 2 provided inside the sleeve 3. By providing the nonmetal reinforcer 4 and the reinforcer 1 in the cable core, structural strength of the light nonmetal flame-retardant refractory optical cable can be effectively improved, and the nonmetal reinforcer 4 and the reinforcer 1 can be fixed through the first filler rope 5 and the second filler rope 2 provided, such that the cable core forms a stable entirety.

The above solutions are further described below in connection with specific examples and comparison examples.

### Example 1

As shown in FIG. 1, the present example provides a light nonmetal flame-retardant refractory optical cable, including: a cable core, a refractory layer 6 wrapped around a periphery of the cable core, and a low-smoke halogen-free sheathing layer 7 wrapped around a periphery of the refractory layer 6, wherein the cable core includes four optical fiber groups, a nonmetal reinforcer 4 provided at a center of the cable core, and two first filler ropes 5 having the same outer diameter as the optical fiber groups, and wherein each optical fiber group includes a sleeve 3, and an optical fiber, a reinforcer 1, and a second filler rope 2 provided inside the sleeve 3; the refractory layer 6 is a polyimide composite tape, which is a ceramic polyimide composite tape, and which is formed by soaking a polyimide tape in a flame-retardant slurry, and subsequently roasting and curing the soaked polyimide tape at 120 °C; the polyimide composite tape has a thickness of 0.15 mm, and the polyimide composite tape has lapping width of 4 mm; the low-smoke halogen-free sheathing layer 7 includes following ingredients in percentage by weight: 56% of ethylene-vinyl acetate copolymer, 6% of dioctyl phthalate, 2% of polydimethylsiloxane, 10% of aluminum hydroxide, 15% of magnesium hydroxide, 5% of nano silicon dioxide, 3% of glass microspheres, 2% of silicon oil composite, and 1% of white carbon black. The flame-retardant slurry in Example 1 includes following raw materials in part by weight: 30 parts of alkyd resin, 25 parts of amino resin, 5 parts of butyl stearate, 1 part of dolomite powder, 5 parts of hydroxyethyl cellulose, 2 parts of ammonium polyphosphate, 1 part of isocyanate, 8 parts of xylene, and 1 part of carbon black.

### Example 2

Example 2 provides a light nonmetal flame-retardant refractory optical cable, which is substantially the same as that in Example 1, while the difference lies in formula of the flame-retardant slurry. The flame-retardant slurry in Example 2 includes following raw materials in part by weight: 35 parts of alkyd resin, 27 parts of amino resin, 6 parts of butyl stearate, 2 parts of dolomite powder, 8 parts of hydroxyethyl cellulose, 3 parts of ammonium polyphosphate, 1.5 parts of isocyanate, 11 parts of xylene, and 1.5 parts of carbon black.

### Example 3

Example 3 provides a light nonmetal flame-retardant refractory optical cable, which is substantially the same as that in Example 1, while the difference lies in formula of the flame-retardant slurry. The flame-retardant slurry in Example 3 includes following raw materials in part by weight: 40 parts of alkyd resin, 30 parts of amino resin, 8 parts of butyl stearate, 3 parts of dolomite powder, 10 parts of hydroxyethyl cellulose, 5 parts of ammonium polyphosphate, 2 parts of isocyanate, 15 parts of xylene, and 2 parts of carbon black.

### Example 4

Example 4 provides a light nonmetal flame-retardant refractory optical cable, which is substantially the same as that in Example 3, while the difference is that the polyimide composite tape has a thickness of 0.2 mm, and the polyimide composite tape has a lapping width of 4.5 mm; the low-smoke halogen-free sheathing layer 7 includes following ingredients in percentage by weight: 60% of polyethylene, 5% of dioctyl phthalate, 2% of polydimethylsiloxane, 10% of aluminum hydroxide, 10% of magnesium hydroxide, 6% of nano silicon dioxide, 4% of glass microspheres, 2% of silicon oil composite, and 1% of white carbon black.

### The Examples nos. 5 - 9 below as well as in the Table 1 are Comparative Examples only and are not according to the claimed invention.

### Comparative Example 5

Example 5 provides a light nonmetal flame-retardant refractory optical cable, which is substantially the same as that in Example 1. However, in Example 5, the refractory layer is a double-sided synthetic mica tape, the double-sided synthetic mica tape includes mica paper and polyimide films provided at two sides of the mica paper, the mica paper is adhered to the polyimide films through a fireproof glue, and a content of the fireproof glue is 4 g/m²; the mica paper has a thickness of 0.060 mm, the polyimide film has a thickness of 0.03 mm. The fireproof glue in Example 5 includes following raw materials in part by weight: 50 parts of organic silicone resin, 5 parts of hydroxyethyl cellulose, 2 parts of ammonium polyphosphate, 1 part of isocyanate, 10 parts of methylbenzene, 5 parts of ethyl acetate, and 1 part of aluminum hydroxide.

### Comparative Example 6

Example 6 provides a light nonmetal flame-retardant refractory optical cable, which is substantially the same as that in Example 5, while the difference lies in formula of the fireproof glue. The fireproof glue in Example 6 includes following raw materials in part by weight: 55 parts of organic silicone resin, 8 parts of hydroxyethyl cellulose, 4 parts of ammonium polyphosphate, 1.5 parts of isocyanate, 15 parts of methylbenzene, 8.5 parts of ethyl acetate, and 2 parts of aluminum hydroxide.

### Comparative Example 7

Example 7 provides a light nonmetal flame-retardant refractory optical cable, which is the same as that in Example 5 in structure, while the difference lies in formula of the fireproof glue. The fireproof glue in Example 7 includes following raw materials in part by weight: 60 parts of organic silicone resin, 10 parts of hydroxyethyl cellulose, 5 parts of ammonium polyphosphate, 2 parts of isocyanate, 20 parts of methylbenzene, 10 parts of ethyl acetate, and 3 parts of aluminum hydroxide.

### Comparative Example 8

Example 8 provides a light nonmetal flame-retardant refractory optical cable, which is the same as that in Example 5 in structure, while the difference lies in formula of the low-smoke halogen-free sheathing layer 7. The low-smoke halogen-free sheathing layer 7 in Example 8 includes following ingredients in percentage by weight: 55% of polyethylene, 5% of dioctyl phthalate, 3% of polydimethylsiloxane, 20% of aluminum hydroxide, 8% of nano silicon dioxide, 4% of glass microspheres, 3% of silicon oil composite, and 2% of white carbon black.

Comparative Example 9

Example 9 provides a light nonmetal flame-retardant refractory optical cable, which is the same as that in Example 5 in structure, while the difference lies in formula of the low-smoke halogen-free sheathing layer 7. The low-smoke halogen-free sheathing layer 7 in Example 9 includes following ingredients in percentage by weight: 50% of polyethylene, 7% of dioctyl phthalate, 3% of polydimethylsiloxane, 12% of aluminum hydroxide, 12% of magnesium hydroxide, 8% of nano silicon dioxide, 3% of glass microspheres, 3% of silicon oil composite, and 2% of white carbon black.

Performances of the light nonmetal flame-retardant refractory optical cables prepared in the above Example 1 to Example 9 are detected and shown in Table 1, Table 2, and Table 3, wherein Table 1 shows experimental data of temperature cycling of the light nonmetal flame-retardant refractory optical cables prepared in various examples; Table 2 shows flame retardant and refractory performances of the light nonmetal flame-retardant refractory optical cables prepared in various examples; Table 3 shows mechanical performances of the light nonmetal flame-retardant refractory optical cables prepared in various examples.

**Table 1 Experimental Data of Temperature Cycling of the Light Nonmetal Flame-Retardant Refractory Optical Cables Provided in Examples of the Present Disclosure**

| Test Item | Standard Requirement | Test Result | | | | | Conclusion |
|---|---|---|---|---|---|---|---|
| temperature cycling | -40 °C, +60 °C, retention time: 12 hours for each step, relative 20 °C attenuation change ≤0.05 dB/km | optical fiber | cycle | | | | qualified |
| | | | -40 °C | | 60 °C | | |
| | | | Δα 1310 | Δα1550 | Δα 1310 | Δα1550 | |
| | | Example 1 | 0.02 | 0.019 | 0.013 | 0.017 | |
| | | Example 2 | 0.012 | 0.006 | 0.002 | 0.018 | |
| | | Example 3 | 0.008 | 0.007 | 0.003 | 0.007 | |
| | | Example 4 | 0.008 | 0.008 | 0.004 | 0.014 | |
| | | Example 5 | 0.01 | 0.019 | 0.004 | 0.011 | |
| | | Example 6 | 0.018 | 0.013 | 0.007 | 0.008 | |
| | | Example 7 | 0.019 | 0.021 | 0.013 | 0.02 | |
| | | Example 8 | 0.018 | 0.009 | 0.02 | 0.016 | |
| | | Example 9 | 0.016 | 0.006 | 0.008 | 0.005 | |

**Table 2 Flame Retardant and Refractory Performances of the Light Nonmetal Flame-retardant Refractory Optical Cables Provided in the Examples of the Present Disclosure**

| Test Item | Standard Requirement | Test Result | Conclusion |
|---|---|---|---|
| oxygen index (material) | material oxygen index≥35% | 40% | qualified |
| smoke density | light-transmission rate≥50% | 61% | qualified |
| total amount and corrosivity of halogen gas | a) A content of the halogen in a product after the optical cable burns is less than 0.5%, | a) 0.02% | qualified |
| | b) PH of a gas produced in burning is | b) 5.7 | |
| | ≥4.3, | c) 8.2 µS/mm | |
| | c) Conductibility should not be greater than 10 µS/mm | | |
| burning of single optical cable | a) A distance between a lower edge of an upper grip and a starting point of a carbonization portion is ≥50mm | a) 490 mm | qualified |
| | b) A distance between a carbonization point extending downward in burning and a lower edge of an upper fixture is ≤540mm | | |
| | | b) 530 mm | |
| link integrity | The optical cable continuously burns at 750 °C for 90 minutes, then cooled for 10 minutes, and an average attenuation change value of the optical fiber is ≤3dB as tested at a wave band of 1550 nm | 0.16 db | qualified |

**Table 3 Mechanical Performances of the Light Nonmetal Flame-retardant Refractory Optical Cables Provided in the Examples of the Present Disclosure**

| Test Item | Standard Requirement | Test Result | Conclusion |
|---|---|---|---|
| water seepage | L-shaped water jacket, 1-m-high waterspout, 3-m-long sample, no water seepage on total cross-section for 1 h | no water seepage | qualified |
| dripping | Under an environment condition with a temperature of 70 °C (24 h), no filling compound or coating compound and so on should drop out from the optical cable | satisfied | qualified |
| sheath integrity | After water soaking of 24 h, an insulation resistance≥2000 MΩ.km (test voltage 500 V, DC) | 3700 mΩ.km | qualified |
| | After water soaking of 24 h, no breakdown for 2 min under a direct current of 15 KV | satisfied | qualified |
| environme ntal stress cracking resistance | 50 °C, the number of failures is 0/10 after 96 h | 0/10 | qualified |
| elongation at break of sheath | Before aging: medium density polyethylene: ≥350% | 786% | qualified |
| | After aging: medium density polyethylene: ≥300% | 692% | |
| | Rate of change before and after aging is ≤20% | 11.9% | |
| heat shrinkage rate | 100±2 °C, 4 h, ≤5% | 3.5% | qualified |

It can be seen from the above Table 1, Table 2, and Table 3 that, the light nonmetal flame-retardant refractory optical cables provided in the examples of the present disclosure have excellent refractory, water-resistant, and insulation performances, as well as good mechanical performances, and can meet requirements for use in various harsh environments.

According to the above description of the examples disclosed, those skilled in the art could implement or use the present disclosure. Various modifications to these examples would be apparent to those skilled in the art without departing from the scope of the claimed invention. ...

### Industrial Applicability

For the light nonmetal flame-retardant refractory optical cable provided in the present disclosure, the ceramic polyimide composite tape is adopted as the refractory layer, thus, the optical cable has effectively improved refractory and thermal insulation performances, and can withstand a high temperature of 700-800 °C, therefore, the refractory and safety performances of the optical cable are improved.

## Claims

1. A light nonmetal flame-retardant refractory optical cable, comprising: a cable core, a refractory layer (6) wrapped around a periphery of the cable core, and a low-smoke halogen-free sheathing layer (7) wrapped around a periphery of the refractory layer (6), wherein the refractory
layer (6) is a polyimide composite tape, the polyimide composite tape is a ceramic polyimide composite tape, the polyimide composite tape has a thickness of 0.12-0.2 mm, and the polyimide composite tape has a lapping width of 3-5 mm,
wherein the polyimide composite tape is formed by soaking a polyimide tape in a flame-retardant slurry, and subsequently roasting and curing a soaked polyimide tape at 100-180 °C,
wherein the flame-retardant slurry comprises following raw materials in part by weight:
| | |
|---|---|
| alkyd resin | 30-40 parts; |
| amino resin | 25-30 parts; |
| butyl stearate | 5-8 parts; |
| dolomite powder | 1-3 parts; |
| hydroxyethyl cellulose | 5-10 parts; |
| ammonium polyphosphate | 2-5 parts; |
| isocyanate | 1-2 parts; |
| xylene | 8-15 parts; and |
| anti-aging agent | 1-2 parts. |

2. The light nonmetal flame-retardant refractory optical cable according to claim 1, wherein the low-smoke halogen-free sheathing layer (7) comprises following ingredients in percentage by weight:
| | |
|---|---|
| polyolefin | 45-65%; |
| plasticizer | 5-8%; |
| siloxane | 1-3%; |
| gas-phase fire retardant | 20-28%; |
| solid-phase fire retardant | 3-8%; |
| special fire retardant | 5-7%; and |
| white carbon black | 0.5-2%. |

3. The light nonmetal flame-retardant refractory optical cable according to claim 2, wherein the polyolefin is one selected from the grouping consisting of ethylene-vinyl acetate copolymer and polyethylene.

4. The light nonmetal flame-retardant refractory optical cable according to claim 2 or 3, wherein the plasticizer is dioctyl phthalate.

5. The light nonmetal flame-retardant refractory optical cable according to any one of claims 2 to 4, wherein the siloxane is polydimethylsiloxane.

6. The light nonmetal flame-retardant refractory optical cable according to any one of claims 2 to 5, wherein the solid-phase fire retardant is nano silicon dioxide

7. The light nonmetal flame-retardant refractory optical cable according to any one of claims 2 to 6, wherein the gas-phase fire retardant is at least one selected from the grouping consisting of magnesium hydroxide and aluminum hydroxide.

8. The light nonmetal flame-retardant refractory optical cable according to any one of claims 2 to 7, wherein the special fire retardant is glass microspheres and a silicone oil composite.

9. The light nonmetal flame-retardant refractory optical cable according to any one of claims 1 to 8, wherein the cable core comprises: at least one
optical fiber group, a nonmetal reinforcer (4) provided at a center of the cable core, and a first filler rope (5) having a same outer diameter as the optical fiber group, preferably,
the optical fiber group comprises a sleeve (3), and an optical fiber, a reinforcer (1), and a second filler rope (2) provided inside the sleeve (3).

## Patentansprüche

1. Leichtes, nichtmetallisches, flammhemmendes, feuerfestes optisches Kabel, umfassend: einen Kabelkern, eine feuerfeste Schicht (6), die um einen Umfang des Kabelkerns gewickelt ist, und eine raucharme halogenfreie Ummantelungsschicht (7), die um einen Umfang der feuerfesten Schicht (6) gewickelt ist,
- wobei die feuerfeste Schicht (6) ein Polyimid-Verbundband ist, das Polyimid-Verbundband ein keramisches Polyimid-Verbundband ist, das Polyimid-Verbundband eine Dicke von 0,12 bis 0,2 mm aufweist und das Polyimid-Verbundband eine Überlappungsbreite von 3 bis 5 mm aufweist,
- wobei das Polyimidverbundband durch Tränken eines Polyimidbands in einer flammhemmenden Aufschlämmung und anschließendem Rösten und Härten eines getränkten Polyimidbands bei 100° bis 180°C gebildet wird,
- wobei die flammhemmende Aufschlämmung die folgenden Rohmaterialien in Gewichtsanteilen aufweist:
| | |
|---|---|
| - Alkydharz | 30 bis 40 Teile; |
| - Aminoharz | 25 bis 30 Teile; |
| - Butylstearat | 5 bis 8 Teile; |
| - Dolomitpulver | 1 bis 3 Teile; |
| - Hydroxyethylcellulose | 5 bis 10 Teile; |
| - Ammoniumpolyphosphat | 2 bis 5 Teile; |
| - Isocyanat | 1 bis 2 Teile; |
| - Xylol | 8 bis 15 Teile; und |
| - Anti-Aging-Mittel | 1 bis 2 Teile. |

2. Leichtes, nichtmetallisches, flammhemmendes, feuerfestes optisches Kabel nach Anspruch 1, wobei die raucharme halogenfreie Ummantelungsschicht (7) folgende Bestandteile in Gewichtsprozenten aufweist:
| | |
|---|---|
| - Polyolefin | 45 bis 65 %; |
| - Weichmacher | 5 bis 8 %; |
| - Siloxan | 1 bis 3 %; |
| - Gasphasen- Feuerhemmungsmittel | 20 bis 28 %; |
| - Festphasen-Feuerhemmungsmittel | 3 bis 8 %; |
| - spezielles Feuerhemmungsmittel | 5 bis 7%; und |
| - weißer Ruß | 0,5 bis 2 %. |

3. Leichtes, nichtmetallisches, flammhemmendes, feuerfestes optisches Kabel nach Anspruch 2, wobei das Polyolefin eines ist, das aus der Gruppe ausgewählt wird, die aus Ethylen-Vinylacetat-Copolymer und Polyethylen besteht.

4. Leichtes, nichtmetallisches, flammhemmendes, feuerfestes optisches Kabel nach Anspruch 2 oder 3, wobei der Weichmacher Dioctylphthalat ist.

5. Leichtes, nichtmetallisches, flammhemmendes, feuerfestes optisches Kabel nach einem der Ansprüche 2 bis 4, wobei das Siloxan Polydimethylsiloxan ist.

6. Leichtes, nichtmetallisches, flammhemmendes, feuerfestes optisches Kabel nach einem der Ansprüche 2 bis 5, wobei das Festphasen-Feuerhemmungsmittel Nano-Siliziumdioxid ist.

7. Leichtes, nichtmetallisches, flammhemmendes, feuerfestes optisches Kabel nach einem der Ansprüche 2 bis 6, wobei das Gasphasen-Feuerhemmungsmittel zumindest eines ist, das aus der Gruppe ausgewählt wird, die aus Magnesiumhydroxid und Aluminiumhydroxid besteht.

8. Leichtes, nichtmetallisches, flammhemmendes, feuerfestes optisches Kabel nach einem der Ansprüche 2 bis 7, wobei das spezielle Feuerhemmungsmittel aus Glasmikrokugeln und einem Silikonöl-Verbundstoff besteht.

9. Leichtes, nichtmetallisches, flammhemmendes, feuerfestes optisches Kabel nach einem der Ansprüche 1 bis 8, wobei der Kabelkern aufweist: zumindest eine optische Fasergruppe, eine nichtmetallische Verstärkung (4), die in einer Mitte des Kabelkerns vorgesehen ist, und ein erstes Füllseil (5), das vorzugsweise denselben Außendurchmesser wie die optische Fasergruppe aufweist, wobei die optische Fasergruppe eine Hülse (3) und eine optische Faser, eine Verstärkung (1) und ein zweites Füllseil (2) aufweist, das innerhalb der Hülse (3) vorgesehen ist.

## Revendications

1. Câble optique réfractaire ignifuge non métallique léger, comprenant: une âme de câble, une couche réfractaire (6) enroulée autour d'une périphérie de l'âme de câble, et une couche de gainage sans halogène à faible dégagement de fumée (7) enroulée autour d'une périphérie de la couche réfractaire (6), où la couche réfractaire (6) est un ruban composite de polyimide, le ruban composite de polyimide est un ruban composite de polyimide céramique, le ruban composite de polyimide a une épaisseur de 0,12-0,2 mm, et le ruban composite de polyimide a une largeur de chevauchement de 3-5 mm,
dans lequel le ruban composite de polyimide est formé par trempage d'un ruban de polyimide dans une suspension ignifuge, puis grillage et durcissement d'un ruban de polyimide trempé à 100-180°C,
dans lequel la suspension ignifuge comprend les matières premières suivantes en parties en poids:
| | |
|---|---|
| résine alkyde | 30-40 parties; |
| résine aminée | 25-30 parties; |
| stéarate de butyle | 5-8 parties; |
| poudre de dolomie | 1-3 parties; |
| hydroxyéthylcellulose | 5-10 parties; |
| polyphosphate d'ammonium | 2-5 parties; |
| isocyanate | 1-2 parties; |
| xylène | 8-15 parties; et |
| agent antivieillissement | 1-2 parties. |

2. Câble optique réfractaire ignifuge non métallique léger selon la revendication 1, dans lequel la couche de gainage sans halogène à faible dégagement de fumée (7) comprend les ingrédients suivants en pourcentage en poids:
| | |
|---|---|
| polyoléfine | 45-65 %; |
| plastifiant | 5-8 %; |
| siloxane | 1-3 %; |
| ignifuge en phase gazeuse | 20-28 %; |
| ignifuge en phase solide | 3-8 %; |
| ignifuge spécial | 5-7 %; et |
| noir de carbone blanc | 0,5-2 %. |

3. Câble optique réfractaire ignifuge non métallique léger selon la revendication 2, dans lequel la polyoléfine est une polyoléfine choisie dans le groupe consistant en un copolymère éthylène-acétate de vinyle et un polyéthylène.

4. Câble optique réfractaire ignifuge non métallique léger selon la revendication 2 ou 3, dans lequel le plastifiant est le phtalate de dioctyle.

5. Câble optique réfractaire ignifuge non métallique léger selon l'une quelconque des revendications 2 à 4, dans lequel le siloxane est le polydiméthylsiloxane.

6. Câble optique réfractaire ignifuge non métallique léger selon l'une quelconque des revendications 2 à 5, dans lequel l'ignifuge en phase solide est le nanodioxyde de silicium.

7. Câble optique réfractaire ignifuge non métallique léger selon l'une quelconque des revendications 2 à 6, dans lequel l'ignifuge en phase gazeuse est au moins un choisi dans le groupe consistant en l'hydroxyde de magnésium et l'hydroxyde d'aluminium.

8. Câble optique réfractaire ignifuge non métallique léger selon l'une quelconque des revendications 2 à 7, dans lequel l'ignifuge spécial est des microsphères de verre et un composite d'huile de silicone.

9. Câble optique réfractaire ignifuge non métallique léger selon l'une quelconque des revendications 1 à 8, dans lequel l'âme de câble comprend: au moins un groupe à fibre optique, un renforçateur non métallique (4) disposé en un centre de l'âme de câble, et un premier cordon de charge (5) ayant un même diamètre externe que le groupe à fibre optique, de préférence le groupe à fibre optique comprend une gaine (3) et une fibre optique, un renforçateur (1), et un second cordon de charge (2) disposé à l'intérieur de la gaine (3).
